# EUROPEAN PATENT SPECIFICATION

(11) **EP 2 530 946 B1**
(45) Date of publication and mention of the grant of the patent: **15.03.2017**
(21) Application number: 12160280.9
(22) Date of filing: 20.03.2012
(51) Int. Cl.: H04N 21/41, H04N 21/218, H04N 21/422, G06F 3/14

(54) **Method for providing multi-angle broadcasting service, display apparatus, and mobile device using the same**
Verfahren zur Bereitstellung eines Mehrfachwinkelrundfunkdienstes, Anzeigevorrichtung und mobile Vorrichtung hierfür
Procédé de fourniture de service de radiodiffusion multi-angle, appareil d'affichage et dispositif mobile utilisant celui-ci

(30) Priority: 31.05.2011 KR 20110052257
(43) Date of publication of application: 05.12.2012
(73) Proprietor: Samsung Electronics Co., Ltd., Gyeonggi-do 16677 (KR)
(72) Inventor: Kim, Dae-woong, Jeollabuk-do (KR); Yi, Kyu-yull, Gyeonggi-do (KR)
(74) Representative: Walaski, Jan Filip

(56) References cited:
- EP-A1- 1 309 194
- EP-A1- 1 585 332
- US-A1- 2008 040 753
- US-B1- 6 411 275

## Description

The present invention relates to providing and/or using a multi-angle broadcasting service, and more particularly, to a method and an apparatus for providing and/or using a multi-angle broadcasting service providing images picked up from different angles.

Recently, with the development of broadcasting technologies, a multi-angle service has been in the spotlights and has attracted users' attention. The multi-angle service denotes a service that provides a user with images picked up from various angles by using a plurality of cameras, and the service allows the user to select an image picked up from the user's desired angle and view the same. With this service, it became possible for the user to view a broadcasting program from various angles on mobile devices as well as on television.

Meanwhile, the user typically selects a specific angle through specific buttons on a TV remote control or on mobile devices. In that case, the user was inconvenienced by having to input several operations to view an image from the user's desired angle. There may also be another way of providing a menu for selecting the specific angle, but in this case, the user might be interrupted from viewing the current image/broadcast by the menu also displayed on the display. Accordingly, a method for providing a simple multi-angle service which would not interrupt the user from viewing the display is needed.
Ep1585332 relates to a remote video display method, video acquisition device, method thereof, and program thereof.
US6411275 relates to a hand-held display device and a method of displaying screen images.

One or more objects of the invention is to solve the problems described above. In at least preferred embodiments, the invention provides a method for a multi-angle broadcasting service enabling the provision of a multi-angle service by receiving a control signal according to the tilt condition of a mobile device and transmitting an image signal picked up from an angle corresponding to the tilt condition, a display apparatus, and a mobile device applying the same.

According to the invention, there is provided a method for providing a multi-angle service by a display apparatus according to claim 1, a method for providing a multi-angle service to a mobile device according to claim 5, a display apparatus providing a multi-angle service according to claim 9, and a mobile device with a multi-angle service according to claim 13.

Additional aspects will be set forth in part in the description which follows and, in part, will be obvious from the description, or may be learned by practice of exemplary embodiments.

The foregoing and/or other aspects may be achieved by providing a method for providing a multi-angle service of a display apparatus including receiving a multi-angle image signal in which content is picked up from a plurality of different angles, displaying a first image signal picked up from a first angle among the plurality of angles according to the received multi-angle image signal, transmitting the displayed first image signal to a mobile device according to a user command, and if the mobile device is rotated, transmitting another image signal to the mobile device picked up from another angle corresponding to a condition of the mobile device being rotated among the plurality of angles. At this time, the another image signal may be an image signal picked up from an angle equal to or adjacent to the angle of rotation of the device.

The method may further include, when the mobile device is rotated, generating at least one seamless image between a first angle and a second angle by using the first image signal picked up from the first angle and the second image signal picked up from the second angle, wherein the first angle corresponds to the condition before the angle of rotation is changed and the second angle corresponds to the condition that the angle of rotation has been changed, and transmitting the generated at least one seamless image to the mobile device.

And, the method may further include receiving information regarding the angle and the direction of rotation of the mobile device or a command requesting transmission of an image signal picked up from one angle among the plurality of angles according to the angle or the direction of rotation of the mobile device.

The display apparatus may be a television and the mobile device may be an MP₃ player or a mobile phone.

The foregoing and/or other aspects may be achieved by providing a method for providing a multi-angle service to a mobile device including receiving a first image signal picked up from a first angle among a plurality of angles from a display apparatus where the display apparatus receives a multi-angle image signal in which content is picked up from a plurality of different angles, displaying the received first image signal, detecting rotation of the mobile device, transmitting to the display apparatus a control signal corresponding to the detected rotation of the mobile device, receiving from the display apparatus a second image signal picked up from a second angle corresponding to the condition of being rotated among the plurality of angles from the display apparatus, and displaying the same. At this time, the condition of rotating the mobile device may include at least the second angle and a direction of rotation of the mobile device.

The method may further include setting a condition which corresponds to the rotated mobile device where positioning of the display apparatus is a reference condition, and the detecting the condition includes detecting the second angle and a direction of rotation of the mobile device from the reference condition.

Meanwhile, a control signal corresponding to a condition that indicates the rotated mobile device includes information regarding the second angle and a direction of rotation of the mobile device or a command requesting to transmit the second image signal picked up from the second angle among the plurality of angles.

The foregoing and/or other aspects may also be achieved by providing a display apparatus providing a multi-angle service including a receiving unit which receives a multi-angle image signal in which content is picked up from a plurality of different angles, a display unit which displays a first image signal picked up from a first angle among the plurality of angles according to the multi-angle image signal, a communication interface unit which transmits the first image signal to a mobile device according to a user command, and a control unit, when the mobile device is rotated, controls the communication interface unit to transmit a second image signal picked up from a second angle corresponding to a condition of the mobile device being rotated among the plurality of angles. At this time, the second image signal may be an image signal picked up from an angle equal to or adjacent to the angle of rotation of the device.

The control unit, when the mobile device is rotated, may control the display apparatus to generate one or more seamless images between the first angle and the second angle by using the first image signal picked up from the first angle and the second image signal picked up from the second angle, wherein the first angle corresponds to a condition before the angle of rotation is changed and the second angle corresponds to the condition that the angle of rotation has been changed, and controls the communication interface unit to transmit the generated image to the mobile device.

The communication interface unit may receive information regarding the second angle and a direction of rotation of the mobile device or may receive a command requesting a transmission of the second image signal picked up from the second angle among the plurality of angles according to the second angle and a direction of rotation of the mobile device.

The display apparatus may be a television and the mobile device may be an MP₃ player or a mobile phone.

The foregoing and/or other aspects may also be achieved by providing a mobile device with a multi-angle service including a communication interface unit which receives a multi-angle image signal in which content is picked up from a plurality of different angles, a display unit which displays the received first image signal, a detection unit which detects a condition of the mobile device being rotated, and a control unit which controls the communication interface unit to transmit a control signal corresponding to the detected condition of the mobile device being rotated, to receive from the display apparatus a second image signal picked up from a second angle corresponding to the condition of the mobile device being rotated among the plurality of angles, and which controls the display unit to display the same. At this time, a condition in which the mobile device is rotated may include at least one of the second angle and a direction of rotation of the mobile device.

The control unit may control to set a reference condition to a position of the mobile device when the display apparatus picks up the multi-angle image and controls the detection unit to detect the second angle and a direction of rotation of the mobile device from the reference condition.

Meanwhile, the control signal corresponding to the detected condition of being rotated may include information regarding the second angle and a direction of rotation of the mobile device or a command requesting to transmit the second image signal picked up from the second angle among the plurality of angles and the direction of rotation of the mobile device.

According to aspects, the user may select an angle from which he desires to view the content according to the rotation of the mobile device, thereby a multi-angle service is provided which has more simple operation and does not interrupt the user's view.

These and/or other aspects will become apparent and more readily appreciated from the following description of exemplary embodiments, taken in conjunction with the accompanying drawings of which:
FIG. 1 is a diagram illustrating a system which implements a method of multi-angle service according to an exemplary embodiment;
FIG. 2 is a block diagram illustrating a structure of a display apparatus according to an exemplary embodiment;
FIG. 3 is a block diagram illustrating a structure of a mobile device 200 according to an exemplary embodiment;
FIG. 4 a diagram illustrating a system which provides a multi-angle service according to an exemplary embodiment;
FIG. 5 is a diagram illustrating a method for setting a reference condition corresponding to the present condition of rotating the mobile device according to an exemplary embodiment;
FIG. 6 is a diagram illustrating seamless images generated between images picked up from a plurality of angles according to an exemplary embodiment;
FIG. 7 is a flow chart illustrating a method for providing a multi-angle service of a display apparatus according to an exemplary embodiment.
FIG. 8 is a flow chart illustrating a method for providing a multi-angle service in a mobile device according to an exemplary embodiment.

Reference will now be made in detail to the exemplary embodiments, which are illustrated in the accompanying drawings, wherein like reference numerals refer to the like elements throughout the description. The exemplary embodiments are described below sequentially with reference to the accompanying drawings.

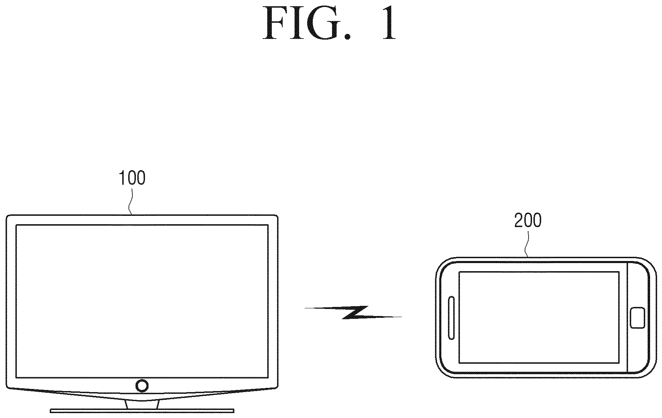

FIG. 1 is a diagram illustrating a system which implements a method of multi-angle service according to an exemplary embodiment. Referring to FIG. 1, the multi-angle service system includes a display apparatus 100 and a mobile device 200.

The display apparatus 100 receives a multi-angle image signal in which a single contents is picked up from a plurality of different angles, displays an image signal picked up from one angle among the plurality of different angles, and transmits the image signal to the mobile device 200 according to a user command. When the mobile device 200 is rotated, the display apparatus 100 transmits an image signal picked up from an angle corresponding to the condition of being rotated among the plurality of angles to the mobile device 200.

The multi-angle image signal includes image signals in which a single contents is picked up from various angles by using a plurality of shooting devices (for example, a camera) and the contents include diverse video contents such as a movie as well as a broadcasting program shot by using the multi-angle image signal.

The image signal picked up from an angle corresponding to the condition of being rotated may be an image signal picked up from an angle of equal to or adjacent to the angle of rotation of the mobile device 200.

The display apparatus 100 for conducting such functions may be a digital TV, a PC, or the like. But it is not restricted thereto and it may be any devices capable of receiving contents from an external device (not shown) and displaying the same.

The mobile device receives an image signal picked up from one angle among a plurality of angles from the display apparatus 100 and displays the same. And, when the mobile device 200 is rotated, the mobile device detects the condition of being rotated, transmits a control signal corresponding to the condition of being rotated, receives an image signal picked up from the angle corresponding to the condition of being rotated among the plurality of angles from the display apparatus 100, and displays the same.

Since the mobile device 200 receives image signals from the display apparatus 100, they may be connected with each other via a communication network such as WiFi(Wireless Fidelity), Bluetooth, or the like, and also via a wired cable (for example, USB), or the like.

The control signal includes information regarding the angle and the direction of rotation of the mobile device 200 or a command requesting to transmit an image signal picked up from one angle of the plurality of angles according to the angle and the direction of rotation.

The mobile device 200 is equipped with diverse sensors such as a gravity acceleration sensor, a terrestrial magnetism sensor, a gyro sensor, or the like, to detect an angle of rotation.

The mobile device 200 conducting such functions may be a mobile phone or an MP₃ which are easy to carry and are capable of displaying image signals, but the mobile device may be implanted as other diverse devices having a function of displaying image signals, such as a PDA, a PMP, a navigation, or the like.

As such, the display apparatus 100 displays an image signal picked up from one angle, the mobile device 200 receives an image signal picked up from an angle corresponding to the condition of it being rotated from the display apparatus 100 and displays the same. Accordingly, even when several users view the contents using the display apparatus 100 together, the user may be able to view the contents picked up from the user's desired angle on the mobile device 200 with instinctive and simple operation.

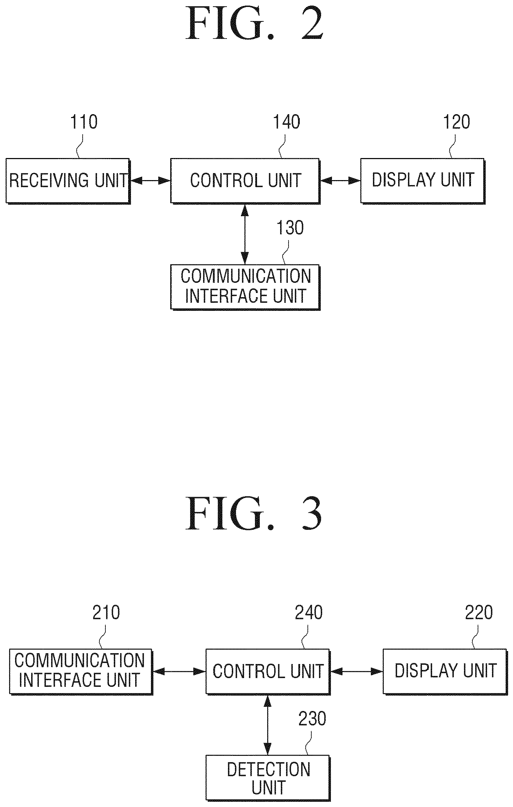

FIG. 2 is a block diagram illustrating a structure of a display apparatus 100 according to an exemplary embodiment. Referring to FIG. 2, the display apparatus 100 includes a receiving unit 110, a display unit 120, a communication interface unit 130, and a control unit 140.

The receiving unit 110 receives various image signals and voice signals from external devices. Specifically, the receiving unit 110 receives a multi-angle image signal in which a single contents is picked up from a plurality of different angles.

In an exemplary embodiment, the multi-angle image signal includes a signal in which a single object is picked up from a plurality of angles. That is, the signal includes an image signal picked up by a shooting device positioned to face the object and image signals picked up by a plurality of shooting devices arranged to shoot the object sideways (leftward/rightward) and the vertical (upper side/lower side).

Each of the plurality of shooting devices arranged so as to form a predetermined angle of shooting the object. For example, the shooting devices may be located such that the direction of shooting the object is varied by 10° degree interval within 0° through 90° degrees.

Meanwhile, the receiving unit 110 may be implemented as a tuner receiving an image signal from a broadcasting station or a satellite and demodulating the same, or an interface such as an S-Video, a component, a composite, a D-Sub, a DVI, an HDMI, and the like to receive an image signal from an external device such as a PC, a camera, a DVD, and the like, when it is considered that the contents includes contents like a movie as well as a broadcasting program. The receiving unit 110 may connect to the external device and the display device 100 wirelessly such as the internet and WiFi.

The display unit 120 displays the image signal received from the receiving unit 110. Since the multi-angle image signal is received through the receiving unit 110, the display unit 120 displays an image signal picked up from one angle of the plurality angles according to the multi-angle image signal. The display unit 120 may be implemented as an LCD panel like a general display apparatus, but the exemplary embodiment is not restricted thereto.

The communication interface unit 130 performs communication with the mobile device 200. Specifically, the communication interface 130 transmits an image signal to the mobile device 200 according to a user command. Here, the image signal is an image signal with respect to the presently displayed image on the display apparatus 100, and the user command to transmit such image signal is input from the mobile device 200 or from a specific key (not shown) installed in a main body of the display apparatus 100.

The communication interface unit 130 receives diverse information from the mobile device 200. Specifically, the communication interface unit 130 receives information with respect to the angle and the direction of rotation of the mobile device 200 or a command requesting to transmit an image signal picked up from one angle among the plurality of angles corresponding to the angle and the direction of rotation. For this, the communication interface unit 130 may connect to the mobile device 200 through a network, such as the internet, LAN(Local Area Network), Wi-Fi (Wireless Fidelity), Ethernet, TCP/IP, IPX(Internet Packet Exchange), FireWire, IEEE 1394, iLink, CDMA, TDMA, BT(BlueTooth), HDMI-CEC(High Definition Multimedia Interface), Wireless HDMI-CEC, RF(Radio Frequency), and the like.

The control unit 140 controls general operation of each component included in the display apparatus 100. Particularly, when the mobile device 200 is rotated, the control unit 140 controls the communication interface unit 130 to transmit to the mobile device 200 an image signal picked up from an angle corresponding to the condition of the mobile device 200 being rotated among the plurality of angles. At this time, the image signal picked up from an angle corresponding to the condition of being rotated maybe the image signal picked up from an angle equal to or adjacent to the angle of rotation of the mobile device 200. Specifically, when the control unit 140 receives information regarding the angle and the direction of rotation of the mobile device 200, it is controlled that an image signal picked up from the angle of rotation corresponding to the direction of rotation or an image signal picked up from an angle adjacent to the angle of rotation is transmitted to the mobile device 200. For example, when it is assumed that the control unit 140 receives information representing that the mobile device 200 is rotated by 60° clockwise, the control unit 140 controls the communication interface unit 130 such that an image signal picked up from 60° counterclockwise from the angle in which the presently displayed image on the display device has been picked up among images picked up from the plurality of angles, may be transmitted to the mobile device 200. Or, it is controlled that an image signal picked up from the most adjacent angle to the position of 60° counterclockwise is transmitted to the mobile device 200. In other words, if there does not exist an image signal picked up from the position of 60 counterclockwise from the angle in which the presently displayed image has been picked up among the multi-angle image signals received from the external device, an image signal picked up from the most adjacent angle to the corresponding angle (for example, an image signal picked up from an angle of 50° counterclockwise apart) may be transmitted to the mobile device.

For the above, when the receiving unit 110 receives a multi-angle image signal, the receiving unit 10 also receives information regarding angles and the direction of a plurality of different shooting devices picking up the object from various angles.

Although it is described that when the control unit 140 receives information regarding the angle and the direction of rotation of the mobile device 200 from the mobile device 200, an image signal corresponding to the information is transmitted to the mobile device 200 in the above exemplary embodiment, the description is just an example. When the control unit 140 receives a command requesting to transmit an image signal picked up from one angle among the plurality of angles according to the angle and the direction of rotation of the mobile device 200, it is also controlled that an image signal picked up from the angle of rotation corresponding to the direction of rotation or an image signal picked up from the angle adjacent to the angle of rotation is transmitted to the mobile device 200.

The control unit 140 generates a seamless image corresponding to the rotation of the mobile device 200. Specifically, the control unit 140 generates a seamless image between an image picked up from a first angle and an image picked up from a second angle, wherein the first angle corresponds to the condition before the angle of rotation of the mobile device 200 is changed and the second angle correspond to the condition that the angle of rotation has been changed. More specifically, the control unit 140 divides each frame composing images before and after the angle of rotation is changed into a plurality of blocks (for example, mxn), and calculates a pixel value (or an average of pixel values) of each block. The position where the object existed on the image before the angle is changed and exists on the image after the angle of rotation has been changed may be detected by comparing the pixel values of corresponding blocks between frames of before and after the angle of rotation being changed. And, an image to interpolate the image between the images before and after the angle of rotation is changed, that is, a seamless image may be generated based on the detected position. Other than this, as another example, the seamless image may be generated by using overlapped parts between the image picked up from the first angle and the image picked up from the second angle. Accordingly, when the user rotates the mobile device 200, the user may view a seamless image between specific angles as well as images picked up from the specific angles.

Meanwhile, by way of an example, the control unit 140 generates a seamless image signal in the above exemplary embodiment. A seamless image signal may be generated through a separate image processor (not shown) included in the display apparatus 100 and from an external source device transmitting a multi-angle image signal.

The display device 100 may further include function blocks for conducting its own functions. For example, in case that the display apparatus 100 is implemented as a television, an A/V processing unit (not shown) performing signal processing such as video decoding, video scaling, audio decoding, or the like, with respect to an input image signal and an input voice signal, an audio output unit (not shown) outputting the voice output from the A/V processor through a speaker, and a GUI (Graphical User Interface) (not shown) generating unit generating a GUI to be displayed on the screen and adding the generated GUI to the image output from the A/V processor may further be included. An encoding unit (not shown) encoding an image signal such that the image signal may be displayed on the mobile device may also be included.

FIG. 3 is a block diagram illustrating a structure of a mobile device 200 according to an exemplary embodiment. Referring to FIG. 3, the mobile device 200 includes a communication interface unit 210, a display unit 220, a detection unit 230, and a control unit 240. The mobile device 200 may further include an application execution unit (not shown) operating and executing an application which provides a multi-angle service by interworking with the display apparatus 100.

The communication interface unit 210 communicates with the display apparatus 100 by connecting to the display apparatus 100 through a method of wire/wireless. Specifically, the communication interface unit 210 receives an image signal picked up from one angle among a plurality of angles. At this time, the image signal picked up from one angle may be the presently displayed image on the display apparatus 100. For this, the communication interface unit 210 is connected to the display apparatus 100 through a network such as the internet, LAN, Wi-Fi(Wireless Fidelity), Ethernet, TCP/IP, IPX, FireWire, IEEE1394, iLink, CDMA, TDMA, BT(BlueTooth), HDMI-CEC(High Definition Multimedia Interface), Wireless HDMI-CEC, RF(Radio Frequency), and the like.

The display unit 220 displays an image signal. Specifically, when an image signal picked up from one angle among a plurality of angles is received from the display apparatus 100, the display unit 220 displays the image signal. Such display unit 120 maybe implemented as an LCD panel like a general mobile device, but the exemplary embodiment is not necessarily restricted thereto. The display unit 120 may be implemented as a touch screen. Thus, the user may input diverse commands such as a command requesting the display apparatus 100 to transmit an image signal by touching the touch screen directly or selecting various keys (not shown) installed in a main body of the mobile device 200.

The detection unit 230 detects movement of the mobile device 200. The movement denotes movement of the mobile device 200 such as being rotated. For detecting the movement, the detection unit 230 may be implemented as diverse sensors such as a gravity acceleration sensor, a terrestrial magnetism sensor, a gyro sensor, and the like.

For example, in case that the detection unit 230 is implanted as a terrestrial magnetism sensor using a flux gate, the detection unit 230 may include a flux gate sensor which is composed of a flux gate core made of high permeable magnetic material such as permalloy, a driving coil winding the core, and a detecting coil. At this time, the number of the flux gate core may be two or three. Each flux gate core is fabricated with a form of being mutually orthogonal. That is, a two axis flux gate sensor is implemented as an X-axis and Y-axis flux gate, and a three axis flux gate sensor is implemented as a X-axis, Y-axis, and Z-axis flux gate. Accordingly, when a driving signal is transmitted to each driving coil winding, each flux gate core magnetic is inducted by the core, and then, a second harmonic element proportional to the external magnetic field may be detected by the detecting coil, thereby obtaining a range and a direction of the external magnetic filed. The angle and the direction of rotation of the mobile device may be detected by comparing the direction of the magnetic filed previously measured and the direction of the magnetic filed presently measured.

As another example, the detection unit 230 may include a gyro sensor. A gyro sensor is for sensing angular variation per second. That is, when an object moves, coriolis forces appear, and the gyro sensor detects the angular velocity which effects the inertial system by using the coriolis effect with respect to the coriolis forces. Accordingly, the angle and the direction of rotation of the mobile device may be detected.

Meanwhile, the mobile device 200 may further include an acceleration sensor to compensate influence according to a degree of being tilted. That is, the detection unit 230 senses even an inclination angle such as a pitch angle and a roll angle measured by the acceleration sensor, so that the angle and the direction of rotation may be exactly calculated.

As the above, the detection unit 230 may use diverse sensors, but more detailed description regarding structures and operations of the sensors is omitted.

The control unit 240 controls general operation of each component included in the mobile device 200. Particularly, the control unit 240 controls the detection unit 230 to detect the condition of the mobile device being rotated, that is, the rotation and the direction the mobile device 200. Specifically, the control unit 240 displays an image identical to the image which is presently displayed on the display apparatus 100 by performing an application providing a multi-angle service and controls the detection unit 230 to detect the angle and the direction of rotation of the mobile device 200 as a reference position of the mobile device at the time point of executing the application. Also, when executing the application, a default value might be already set so as to set a specific position as a reference regardless of the present position of the mobile device.

As another example, after the control unit 240 displays an image identical to the presently displayed image on the display device 100 by using an application, the control unit 240 controls the detection unit 230 to detect the angle and the direction of rotation of the mobile device 200 as a reference position of the mobile device at the time of picking up the display apparatus 100.

Although it is restricted to the time point of picking up the display apparatus 100 in the above exemplary embodiment, the restriction is just an example, and the reference position of the mobile device 200 may also be at the time point of selecting a specific key(not shown) installed in the mobile device. In other words, even if the user executed an application with inclined to the display apparatus, when the mobile device is positioned in parallel with the display apparatus or a specific key is selected thereafter, a position of the mobile device at the corresponding time point may be set as a reference.

The control unit 240 transmits a control signal corresponding to the condition of the mobile device 200 being rotated, which is detected by the detection unit 230 and provided to the display device 100 and controls the communication interface unit 210 to receive from the display apparatus 100 an image signal picked up from an angle corresponding to the condition of being rotated. And the control unit 240 controls the display unit 220 to display the received image signal.

At this time, the condition of being rotated may include at least one of the angle of rotation and the direction of rotation of the mobile device 200 detected by the detection unit 230.

The control signal may include information regarding the angle and the direction of rotation of the mobile device 200 detected by the detection unit 230 or a command requesting to transmit an image picked up from one angle among a plurality of angles according to the detected angle and direction of rotation. For example, the control signal maybe information representing the mobile device 200 being rotated by 60° clockwise or a command requesting to transmit an image signal picked up from a position of 60° counterclockwise apart from the angle from which the presently displayed image has been picked up.

And corresponding to the above, the control unit 240 receives from the display apparatus 100 an image signal picked up from an angle corresponding to the angle and direction of rotation of the mobile device 200 and controls the mobile device 200 to display the image signal.

The control unit 240 generates a seamless image between a plurality of angles. That is, the control unit 240 generates a seamless image between a first angle and a second angle by using an image signal picked up from the first angle and the image signal picked up from a second angle, wherein the first angle and the second angle correspond to the condition of rotated mobile device. The details on this was already described in FIG. 2, thus a detail description is omitted here, and, an image processing unit (not shown) may be prepared separately for generating a seamless image.

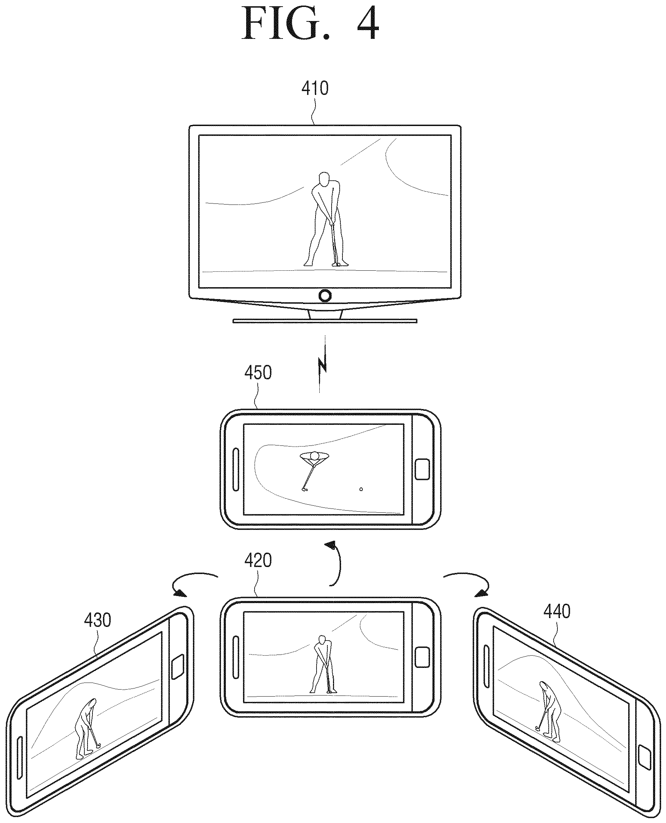

FIG. 4 is a diagram illustrating a system for providing a multi-angle service according to an exemplary embodiment. Referring to FIG. 4, a display apparatus 410 displays an image signal picked up from one angle among a plurality of angles. Thereafter, when an application for providing a multi-angle service on a mobile device is executed, the presently displayed image is received from the display apparatus 410 and is displayed. Since FIG. 4 introduces the case of executing the application and picking up the display apparatus in a condition that the mobile device is arranged in parallel with the display apparatus 410, the position of the mobile device which is parallel with the display device 410 is regarded as a reference to detect the angle and the direction of the mobile device.

Accordingly, when the mobile device is positioned to be parallel with the display apparatus 410, the mobile device 420 displays the identical image to the presently displayed image on the display apparatus.

Thereafter, if the mobile device 430 is rotated counterclockwise by a specific angle, the mobile device 430 receives an image signal picked up from an angle rotated clockwise by the corresponding angle from the angle from which the presently displayed image has been picked up among image signals picked up from the plurality of angles and displays the same.

Like the above, if the mobile device 440 is rotated clockwise by a specific angle, the mobile device 440 receives an image signal picked up from an angle rotated counterclockwise by the corresponding angle from the angle from which the presently displayed image has been picked up among image signals picked up from the plurality of angles and displays the same.

If the mobile device 450 is rotated upward by a specific angle, the mobile device 450 receives an image signal picked up from an upper angle than the angle from which the presently displayed image has been picked up among image signals picked up from the plurality of angles and displays the same.

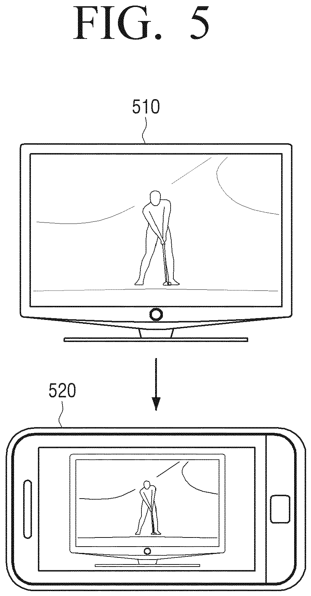

FIG. 5 is a diagram illustrating a method of setting a reference condition corresponding to the present condition of rotating a mobile device according to an exemplary embodiment. Referring to FIG. 5, the reference position may be set for detecting the condition of rotating the mobile device 520 by picking up a display apparatus 510 through a shooting unit installed in a main body of the mobile device.

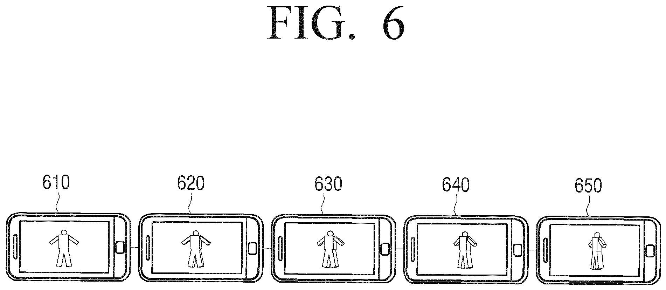

FIG. 6 is a diagram illustrating seamless images generated between images picked up from a plurality of angles according to an exemplary embodiment. FIG. 6 introduces a case that an image signal picked up from one angle among the plurality of angles is displayed on the mobile device 610, and an image signal picked up from a specific angle is displayed on the mobile device 650 which is rotated by the specific angle.

For example, an image signal picked up by a shooting device of a first angle facing the object is displayed on the mobile device 610, and an image signal picked up by a shooting device of a second angle whose direction of shooting forms a specific angle (for example, 60°) from the first angle is displayed on the display device 650 which is rotated by the specific angle.

As described in FIG. 2, the display device generates a seamless image between a first angle and a second angle by using an image signal picked up from the first angle and an image signal picked up from the second angle, wherein the second angle corresponds to the condition that the angle of rotation has been changed, and transmits the same to the mobile device.

Accordingly, as shown in FIG. 6, when the user rotates the mobile device by a specific angle, the user may view rotating images from the presently displayed image 610 through the image 650 picked up from an angle correspond to the rotated angle, along with the seamless images 620,630,640.

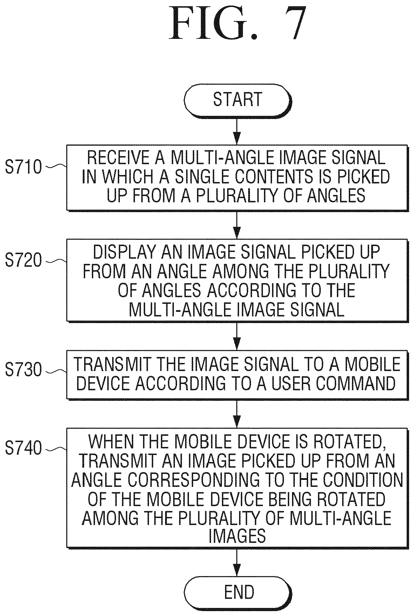

FIG. 7 is a flow chart illustrating a method for providing a multi-angle service of a display apparatus according to an exemplary embodiment.

According to the method for providing a multi-angle service of the display apparatus such as the one shown in FIG 7, at first, the display apparatus receives a multi-angle image signal in which a single contents is picked up from a plurality of different angles (S710). And, the display apparatus displays an image signal picked up from one angle among the plurality of angles according to the multi-angle image signal (S₇₂₀). Then, the display apparatus transmits the image signal to a mobile device according to a user command (S₇₃₀). Thereafter, when the mobile device is rotated, the display apparatus transmits to the mobile device an image signal picked up from an angle corresponding to the condition of the rotated mobile device among the plurality of multi-angle images (S740). At this time, the image signal picked up from an angle corresponding to the condition of the rotated mobile device may be an image signal picked up from an angle equal to or adjacent to the angle of rotation.

In the operation S740, a seamless image between a first angle and a second angle may be generated by using an image signal picked up from the first angle and an image signal picked up from the second angle, wherein the first angle corresponds to the condition before the angle of rotation is changed and the second angle corresponds to the condition where the angle of rotation has been changed, and the seamless image may be transmitted to the mobile device.

In the operation S740, when the mobile device is rotated, information regarding the angle and the direction of rotation of the mobile device or a command requesting to transmit an image signal picked up from one angle among the plurality of angles according to the angle and the direction of rotation of the mobile device may be received.

In the method for providing a multi-angle service of the display apparatus, the display apparatus may be a television, and the mobile device may be an MP₃ or a mobile phone.

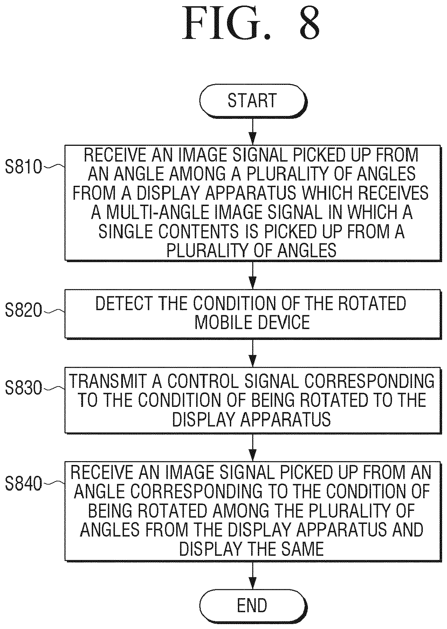

FIG. 8 is a flow chart illustrating a method for providing a multi-angle service of a mobile device according to an exemplary embodiment.

According to the method for providing a multi-angle service of the mobile device in FIG. 8, the mobile device receives an image signal picked up from one angle among a plurality of angles from a display apparatus and displays the same, wherein the display apparatus receives a multi-angle signal in which a single contents is picked up from a plurality of different angles (S810). Next, the mobile device detects the condition of the mobile device being rotated (S820). Thereafter, the mobile device transmits a control signal corresponding to the detected condition of being rotated to the display apparatus (S830), and the mobile device receives an image signal picked up from an angle corresponding to the condition of being rotated among the plurality of angles from the display apparatus and displays the same (S840).

In operation S820, the condition of the rotated mobile device includes at least one of the angle and the direction of rotation of the mobile device.

The method sets the present condition of the mobile device being rotated as a reference condition and detects the angle and the direction of rotation of the mobile device therefrom, which enables it to detect the condition of being rotated.

In the operation S830, the control signal corresponding to the detected condition of being rotated includes information regarding the angle and the direction of rotation of the mobile device or a command requesting to transmit an image signal picked up from one angle among the plurality of angles according to the angle and the direction of rotation of the mobile device.

According to exemplary embodiments, there may be provided a computer readable recording medium including programs to perform the method for providing a multi-angle service of the display apparatus and the mobile device. The computer readable recording medium may be any data storage device that can store data which can be thereafter read by a computer system. Examples of the computer readable storage medium are ROM (Read Only Memory), RAM(Random Access Memory), CD-ROMs, magnetic tape, floppy disk, optical data storage device, and the like. The computer readable recording medium can also be distributed over a network coupled computer systems so that the computer readable code is stored and executed in a distributed fashion.

Although a few exemplary embodiments have been shown and described, it will be appreciated by those skilled in the art that changes may be made in these exemplary embodiments without departing from the invention, the scope of which is defined in the appended claims.

## Claims

1. A method for providing a multi-angle service by a display apparatus (100), the method comprising:
receiving a multi-angle image signal in which a single content is picked up from a plurality of different angles;
displaying a first image signal picked up from a first angle among the plurality of angles according to the received multi-angle image signal;
transmitting the displayed first image signal to a mobile device (200) according to a user command;
receiving a control signal (130) from the mobile device corresponding to detected rotation of the mobile device if the mobile device (200) is rotated;
transmitting to the mobile device (200) another image signal picked up from another angle corresponding to the condition of the mobile device (200) being rotated among the plurality of angles.

2. The method for providing a multi-angle service by the display apparatus according to claim 1, wherein said another image signal is an image signal picked up from the angle of rotation of the mobile device or an angle adjacent to the angle of rotation.

3. The method for providing a multi-angle service by the display apparatus according to claim 1 or 2, the method further comprising:
generating at least one seamless image between the first angle and a second angle by using the first image picked up from the first angle and a second image picked up from a second angle, wherein if the mobile device is rotated, the first angle corresponds to the condition before the angle of rotation of the mobile device is changed and the second angle corresponds to the condition after the angle of rotation of the mobile device is changed; and
transmitting the generated at least one seamless image to the mobile device.

4. The method for providing a multi-angle service by the display apparatus according to any one of claims 1 to 3, wherein the method further comprises:
receiving information regarding the angle and a direction of rotation of the mobile device or receiving a command requesting transmission of an image signal picked up from one angle among the plurality of angles according to the angle and a direction of rotation of the mobile device.

5. A method for providing a multi-angle service to a mobile device (200), the method comprising:
receiving (210) a first image signal picked up from a first angle among a plurality of angles from a display apparatus (100), wherein the display apparatus (100) receives a multi-angle image signal in which a single content is picked up from a plurality of different angles,
displaying (220) the received first image signal;
detecting (230) rotation of the mobile device (200);
transmitting to the display apparatus (100) a control signal corresponding to the detected rotation of the mobile device (200);
receiving from the display apparatus (100) a second image signal picked up from a second angle corresponding to the rotated mobile device (200) among the plurality of angles; and
displaying the received second image signal.

6. The method for providing a multi-angle service to the mobile device according to claim 5,
wherein the rotated mobile device is in a tilt condition comprising at least one of the angle and a direction of rotation of the mobile device.

7. The method for providing a multi-angle service to the mobile device according to claim 6, the method further comprises:
setting a condition that corresponds to the rotated mobile device wherein positioning of the display apparatus is a reference condition,
wherein the detecting the condition comprises detecting the second angle and a direction of rotation of the mobile device from the reference condition.

8. The method for providing a multi-angle service to the mobile device according to claim 6 or 7,
wherein the control signal corresponding to a condition that indicates the rotated mobile device comprises information regarding the second angle and a direction of rotation of the mobile device or a command requesting to transmit the second image signal picked up from the second angle among the plurality of angles.

9. A display apparatus (100) providing a multi-angle service, the display apparatus comprising:
a receiving unit (110) which receives a multi-angle image signal in which a single content is picked up from a plurality of different angles;
a display unit (120) which displays a first image signal picked up from a first angle among the plurality of angles according to the received multi-angle image signal;
a communication interface unit (130) which transmits the first image signal to a mobile device (200) according to a user command;
a receiver (130) which receives a control signal from the mobile device corresponding to detected rotation of the mobile device when the mobile device (200) is rotated; and
a control unit (140) which controls the communication interface unit (130) to transmit to the mobile device (200) a second image signal picked up from a second angle corresponding to a condition of the mobile device (200) being rotated among the plurality of angles, when the mobile device (200) is rotated.

10. The display apparatus according to claim 9, wherein the second image signal is an image signal picked up from the angle of rotation of the mobile device or an angle adjacent to the angle of rotation.

11. The display apparatus according to claim 10,
wherein the control unit (140) controls the display apparatus to generate a seamless image between the first angle and the second angle by using a first image picked up from the first angle and a second image picked up from the second angle, and
wherein the first angle corresponds to a condition before the angle of rotation of the mobile device is changed and the second angle corresponds to the condition after the angle of rotation has been changed, and
wherein the control unit controls the communication interface unit (130) to transmit the generated seamless image to the mobile device.

12. The display apparatus according to claims 10 or 11, wherein the communication interface unit receives information regarding the second angle and a direction of rotation of the mobile device or a command requesting transmission of the second image signal picked up from the second angle among the plurality of angles according to the second angle and a direction of rotation of the mobile device.

13. A mobile device (200) provided with a multi-angle service, the mobile device (200) comprising:
a communication interface unit (210) which receives from a display apparatus (100) a first image signal picked up from a first angle among a plurality of angles, wherein the display apparatus (100) receives a multi-angle image signal in which a single content is picked up from the plurality of angles;
a display unit (220) which displays the received first image signal;
a detection unit (230) which detects a condition of the mobile device (200) being rotated; and
a control unit (240) which controls the communication interface unit (210) to transmit a control signal corresponding to the detected condition of the mobile device (200) being rotated, to receive from the display apparatus (100) a second image signal picked up from a second angle corresponding to the condition of the mobile device (200) being rotated among the plurality of angles, and which controls the display unit (220) to display the second image signal.

14. The mobile device according to claim 13, wherein the condition of being rotated of the mobile device includes at least one of the second angle and a direction of rotation of the mobile device.

15. The mobile device according to claim 13 or 14, wherein the control unit controls to set a reference condition to a position of the mobile device when the display apparatus picks up the multi-angle image and controls the detection unit to detect the second angle and a direction of rotation of the mobile device from the reference condition.

## Patentansprüche

1. Verfahren zum Bereitstellen eines Mehrwinkeldiensts durch eine Anzeigevorrichtung (100), wobei das Verfahren Folgendes umfasst:
Empfangen eines Mehrwinkel-Bildsignals, in dem ein einziger Inhalt aus einer Vielzahl verschiedener Winkel erfasst wird;
Anzeigen eines ersten Bildsignals, das aus einem ersten Winkel unter der Vielzahl von Winkeln erfasst wird, gemäß dem empfangenen Mehrwinkel-Bildsignal;
Übertragen des angezeigten ersten Bildsignals an ein mobiles Gerät (200), gemäß einem Benutzerbefehl;
Empfangen eines Steuersignals (130) von dem mobilen Gerät, das der erkannten Drehung des mobilen Geräts entspricht, wenn das mobile Gerät (200) gedreht wird;
Übertragen, an das mobile Gerät (200), eines anderen Bildsignals, das aus einem anderen Winkel erfasst wird, der dem Zustand des mobilen Geräts (200) entspricht, das zwischen der Vielzahl von Winkeln gedreht wird.

2. Verfahren zum Bereitstellen eines Mehrwinkeldiensts durch die Anzeigevorrichtung nach Anspruch 1, wobei es sich bei dem anderen Bildsignal um ein Bildsignal handelt, das aus dem Drehwinkel des mobilen Geräts oder einem dem Drehwinkel benachbarten Winkel erfasst wird.

3. Verfahren zum Bereitstellen eines Mehrwinkeldiensts durch die Anzeigevorrichtung nach Anspruch 1 oder 2, wobei das Verfahren weiter Folgendes umfasst:
Erzeugen von mindestens einem nahtlosen Bild zwischen dem ersten Winkel und einem zweiten Winkel durch Verwenden des ersten, aus dem ersten Winkel erfassten Bilds und eines aus einem zweiten Winkel erfassten, zweiten Bilds, wobei, wenn das mobile Gerät gedreht wird, der erste Winkel dem Zustand, bevor der Drehwinkel des mobilen Geräts geändert wird, entspricht und der zweite Winkel dem Zustand, nachdem der Drehwinkel des mobilen Geräts geändert wird, entspricht; und
Übertragen des erzeugten mindestens einen nahtlosen Bilds an das mobile Gerät.

4. Verfahren zum Bereitstellen eines Mehrwinkeldiensts durch die Anzeigevorrichtung nach einem der Ansprüche 1 bis 3, wobei das Verfahren weiter Folgendes umfasst:
Empfangen von den Winkel und eine Richtung der Drehung des mobilen Geräts betreffenden Informationen oder Empfangen eines Befehls, der die Übertragung eines aus einem unter der Vielzahl von Winkeln erfassten Bildsignals gemäß dem Winkel und einer Richtung der Drehung des mobilen Geräts anfordert.

5. Verfahren zum Bereitstellen eines Mehrwinkeldiensts für ein mobiles Gerät (200), wobei das Verfahren Folgendes umfasst:
Empfangen (210) eines ersten Bildsignals von einer Anzeigevorrichtung (100) her, das aus einem ersten Winkel unter einer Vielzahl von Winkeln erfasst wird, wobei die Anzeigevorrichtung (100) ein Mehrwinkel-Bildsignal empfängt, in dem ein einziger Inhalt aus einer Vielzahl verschiedener Winkel erfasst wird,
Anzeigen (220) des empfangenen ersten Bildsignals;
Erkennen (230) von Drehung des mobilen Geräts (200);
Übertragen, an die Anzeigevorrichtung (100), eines Steuersignals, das der erkannten Drehung des mobilen Geräts (200) entspricht;
Empfangen, von der Anzeigevorrichtung (100) her, eines zweiten Bildsignals, das aus einem dem gedrehten mobilen Gerät (200) entsprechenden zweiten Winkel unter der Vielzahl von Winkeln erfasst wird; und
Anzeigen des empfangenen zweiten Bildsignals.

6. Verfahren zum Bereitstellen eines Mehrwinkeldiensts für das mobile Gerät nach Anspruch 5,
wobei sich das gedrehte mobile Gerät in einem Kippzustand befindet, der den Winkel und/oder eine Richtung der Drehung des mobilen Geräts umfasst.

7. Verfahren zum Bereitstellen eines Mehrwinkeldiensts für das mobile Gerät nach Anspruch 6, wobei das Verfahren weiter Folgendes umfasst:
Einstellen eines Zustands, der dem gedrehten mobilen Gerät entspricht, wobei es sich bei der Positionierung der Anzeigevorrichtung um einen Bezugszustand handelt,
wobei das Erkennen des Zustands das Erkennen des zweiten Winkels und einer Richtung der Drehung des mobilen Geräts von dem Bezugszustand aus umfasst.

8. Verfahren zum Bereitstellen eines Mehrwinkeldiensts für das mobile Gerät nach Anspruch 6 oder 7,
wobei das Steuersignal, das einem das gedrehte mobile Gerät angebenden Zustand entspricht, den zweiten Winkel und eine Richtung der Drehung des mobilen Geräts betreffende Informationen oder einen Befehl, der das Übertragen des aus dem zweiten Winkel unter der Vielzahl von Winkeln erfassten zweiten Bildsignals anfordert, umfasst.

9. Anzeigevorrichtung (100), die einen Mehrwinkeldienst bereitstellt, wobei die Anzeigevorrichtung Folgendes umfasst:
eine Empfangseinheit (110), die ein Mehrwinkel-Bildsignal empfängt, in dem ein einziger Inhalt aus einer Vielzahl verschiedener Winkel erfasst wird;
eine Anzeigeeinheit (120), die ein erstes Bildsignal gemäß dem empfangenen Mehrwinkel-Bildsignal anzeigt, das aus einem ersten Winkel unter der Vielzahl von Winkeln erfasst wird;
eine Kommunikationsschnittstelleneinheit (130), die das erste Bildsignal gemäß einem Benutzerbefehl an ein mobiles Gerät (200) überträgt;
einen Empfänger (130), der ein Steuersignal von dem mobilen Gerät empfängt, das der erkannten Drehung des mobilen Geräts entspricht, wenn das mobile Gerät (200) gedreht wird; und
eine Steuereinheit (140), die die Kommunikationsschnittstelleneinheit (130) dazu steuert, ein zweites Bildsignal an das mobile Gerät (200) zu übertragen, das aus einem, einem Zustand des mobilen Geräts (200), das zwischen der Vielzahl von Winkeln gedreht wird, entsprechenden zweiten Winkel erfasst wird, wenn das mobile Gerät (200) gedreht wird.

10. Anzeigevorrichtung nach Anspruch 9, wobei es sich bei dem zweiten Bildsignal um ein Bildsignal handelt, das aus dem Drehwinkel des mobilen Geräts oder einem dem Drehwinkel benachbarten Winkel erfasst wird.

11. Anzeigevorrichtung nach Anspruch 10,
wobei die Steuereinheit (140) die Anzeigevorrichtung dazu steuert, durch Verwenden eines aus dem ersten Winkel erfassten, ersten Bilds und eines aus dem zweiten Winkel erfassten, zweiten Bilds ein nahtloses Bild zwischen dem ersten Winkel und dem zweiten Winkel zu erzeugen, und
wobei der erste Winkel einem Zustand, bevor der Drehwinkel des mobilen Geräts geändert wird, entspricht und der zweite Winkel dem Zustand, nachdem der Drehwinkel geändert wurde, entspricht, und
wobei die Steuereinheit die Kommunikationsschnittstelleneinheit (130) dazu steuert, das erzeugte nahtlose Bild an das mobile Gerät zu übertragen.

12. Anzeigevorrichtung nach Anspruch 10 oder 11, wobei die Kommunikationsschnittstelleneinheit den zweiten Winkel und eine Richtung der Drehung des mobilen Geräts betreffende Informationen oder einen Befehl, der die Übertragung des aus dem zweiten Winkel unter der Vielzahl von Winkeln gemäß dem zweiten Winkel und einer Richtung der Drehung des mobilen Geräts erfassten zweiten Bildsignals anfordert, empfängt.

13. Mobiles Gerät (200), dem ein Mehrwinkeldienst bereitgestellt wird, wobei das mobile Gerät (200) Folgendes umfasst:
eine Kommunikationsschnittstelleneinheit (210), die von einer Anzeigevorrichtung (100) ein erstes Bildsignal, das aus einem ersten Winkel unter einer Vielzahl von Winkeln erfasst wird, empfängt, wobei die Anzeigevorrichtung (100) ein Mehrwinkel-Bildsignal empfängt, in dem ein einziger Inhalt aus der Vielzahl von Winkeln erfasst wird;
eine Anzeigeeinheit (220), die das empfangene erste Bildsignal anzeigt;
eine Erkennungseinheit (230), die einen Zustand des mobilen Geräts (200), das gedreht wird, erkennt; und
eine Steuereinheit (240), die die Kommunikationsschnittstelleneinheit (210) dazu steuert, ein Steuersignal zu übertragen, das dem erkannten Zustand des mobilen Geräts (200), das gedreht wird, entspricht, von der Anzeigevorrichtung (100) ein zweites Bildsignal zu empfangen, das aus einem zweiten Winkel erfasst wird, der dem Zustand des mobilen Geräts (200), das zwischen der Vielzahl von Winkeln gedreht wird, entspricht, und die die Anzeigeeinheit (220) dazu steuert, das zweite Bildsignal anzuzeigen.

14. Mobiles Gerät nach Anspruch 13, wobei der Zustand des Gedrehtwerdens des mobilen Geräts den zweiten Winkel und/oder eine Richtung der Drehung des mobilen Geräts umfasst.

15. Mobiles Gerät nach Anspruch 13 oder 14, wobei die Steuereinheit dazu steuert, einen Bezugszustand auf eine Position des mobilen Geräts einzustellen, wenn die Anzeigevorrichtung das Mehrwinkelbild erfasst und die Erkennungseinheit dazu steuert, den zweiten Winkel und eine Richtung der Drehung des mobilen Geräts von dem Bezugszustand aus zu erkennen.

## Revendications

1. Procédé de fourniture d'un service multi-angle par un appareil d'affichage (100), le procédé comprenant :
la réception d'un signal d'image multi-angle, dans laquelle un contenu individuel est récupéré depuis une pluralité d'angles différents ;
l'affichage d'un premier signal d'image récupéré depuis un premier angle parmi la pluralité d'angles en fonction du signal d'image multi-angle reçu ;
la transmission du premier signal d'image affiché à un dispositif mobile (200) en fonction d'une commande d'utilisateur ;
la réception depuis le dispositif mobile d'un signal de commande (130) correspondant à la rotation détectée du dispositif mobile si le dispositif mobile (200) effectue une rotation ;
la transmission au dispositif mobile (200) d'un autre signal d'image récupéré depuis un autre angle correspondant à la condition du dispositif mobile (200) effectuant une rotation parmi la pluralité d'angles.

2. Procédé de fourniture d'un service multi-angle par l'appareil d'affichage selon la revendication 1, dans lequel ledit autre signal d'image est un signal d'image récupéré depuis l'angle de rotation du dispositif mobile ou un angle adjacent à l'angle de rotation.

3. Procédé de fourniture d'un service multi-angle par l'appareil d'affichage selon la revendication 1 ou la revendication 2, le procédé comprenant en outre :
la génération d'au moins une image continue entre le premier angle et un deuxième angle en utilisant la première image récupérée depuis le premier angle et une deuxième image récupérée depuis un deuxième angle, dans lequel, si le dispositif mobile effectue une rotation, le premier angle correspond à la condition avant que l'angle de rotation du dispositif mobile soit modifié et le deuxième angle correspond à la condition après que l'angle de rotation du dispositif mobile a été modifié ; et
la transmission au dispositif mobile de ladite au moins une image continue générée.

4. Procédé de fourniture d'un service multi-angle par l'appareil d'affichage selon l'une quelconque des revendications 1 à 3, ledit procédé comprenant en outre :
la réception d'une information concernant l'angle et une direction de rotation du dispositif mobile, ou la réception d'une commande demandant la transmission d'un signal d'image récupéré depuis un seul angle parmi la pluralité d'angles en fonction de l'angle et d'une direction de rotation du dispositif mobile.

5. Procédé de fourniture d'un service multi-angle à un dispositif mobile (200), le procédé comprenant :
la réception (210) d'un premier signal d'image récupéré depuis un premier angle parmi une pluralité d'angles depuis un appareil d'affichage (100), l'appareil d'affichage (100) recevant un signal d'image multi-angle dans lequel un contenu individuel est récupéré depuis une pluralité d'angles différents,
l'affichage (220) du premier signal d'image reçu ;
la détection (230) de la rotation du dispositif mobile (200) ;
la transmission à l'appareil d'affichage (100) d'un signal de commande correspondant à la rotation détectée du dispositif mobile (200) ;
la réception depuis l'appareil d'affichage (100) d'un deuxième signal d'image récupéré depuis un deuxième angle correspondant au dispositif mobile (200) ayant effectué une rotation parmi la pluralité d'angles ; et
l'affichage du deuxième signal d'image reçu.

6. Procédé de fourniture d'un service multi-angle au dispositif mobile selon la revendication 5,
dans lequel le dispositif mobile ayant effectué une rotation se trouve dans une condition d'inclinaison comprenant l'un au moins parmi l'angle et une direction de rotation du dispositif mobile.

7. Procédé de fourniture d'un service multi-angle au dispositif mobile selon la revendication 6, ledit procédé comprenant en outre :
la fixation d'une condition qui correspond au dispositif mobile ayant effectué une rotation, le positionnement de l'appareil d'affichage étant une condition de référence,
dans lequel la détection de la condition comprend la détection du deuxième angle et d'une direction de rotation du dispositif mobile depuis la condition de référence.

8. Procédé de fourniture d'un service multi-angle au dispositif mobile selon la revendication 6 ou la revendication 7,
dans lequel le signal de commande correspondant à une condition qui indique que le dispositif mobile ayant effectué une rotation comprend une information concernant le deuxième angle et une direction de rotation du dispositif mobile, ou une commande demandant la transmission du deuxième signal d'image récupéré depuis le deuxième angle parmi la pluralité d'angles.

9. Appareil d'affichage (100) fournissant un service multi-angle, ledit appareil d'affichage comprenant :
une unité de réception (110) qui reçoit un signal d'image multi-angle dans lequel un contenu individuel est récupéré depuis une pluralité d'angles différents ;
une unité d'affichage (120) qui affiche un premier signal d'image récupéré depuis un premier angle parmi la pluralité d'angles en fonction du signal d'image multi-angle reçu ;
une unité d'interface de communication (130) qui transmet le premier signal d'image à un dispositif mobile (200) en fonction d'une commande d'utilisateur ;
un récepteur (130) qui reçoit depuis le dispositif mobile un signal de commande correspondant à la rotation détectée du dispositif mobile lorsque le dispositif mobile (200) effectue une rotation ; et
une unité de commande (140) qui commande à l'unité d'interface de communication (130) de transmettre au dispositif mobile (200) un deuxième signal d'image récupéré depuis un deuxième angle correspondant à une condition du dispositif mobile (200) effectuant une rotation parmi la pluralité d'angles, lorsque le dispositif mobile (200) effectue une rotation.

10. Appareil d'affichage selon la revendication 9, dans lequel le deuxième signal d'image est un signal d'image récupéré depuis l'angle de rotation du dispositif mobile ou un angle adjacent à l'angle de rotation.

11. Appareil d'affichage selon la revendication 10,
dans lequel l'unité de commande (140) commande à l'appareil d'affichage de générer une image continue entre le premier angle et le deuxième angle en utilisant une première image récupérée depuis le premier angle et une deuxième image récupérée depuis le deuxième angle, et
dans lequel le premier angle correspond à une condition avant que l'angle de rotation du dispositif mobile soit modifié et le deuxième angle correspond à la condition après que l'angle de rotation a été modifié, et
dans lequel l'unité de commande (140) commande à l'unité d'interface de communication (130) de transmettre l'image continue générée au dispositif mobile.

12. Appareil d'affichage selon la revendication 10 ou la revendication 11, dans lequel l'unité d'interface de communication reçoit une information concernant le deuxième angle et une direction de rotation du dispositif mobile, ou une commande demandant la transmission du deuxième signal d'image récupéré depuis le deuxième angle parmi la pluralité d'angles en fonction du deuxième angle et d'une direction de rotation du dispositif mobile.

13. Dispositif mobile (200) pourvu d'un service multi-angle, le dispositif mobile (200) comprenant :
une unité d'interface de communication (210) qui reçoit depuis un appareil d'affichage (100) un premier signal d'image récupéré depuis un premier angle parmi une pluralité d'angles, l'appareil d'affichage (100) recevant un signal d'image multi-angle dans lequel un contenu individuel est récupéré depuis la pluralité d'angles ;
une unité d'affichage (220) qui affiche le premier signal d'image reçu ;
une unité de détection (230) qui détecte une condition du dispositif mobile (200) effectuant une rotation ; et
une unité de commande (240) qui commande à l'unité d'interface de communication (210) de transmettre un signal de commande correspondant à la condition détectée du dispositif mobile (200) effectuant une rotation, de recevoir depuis l'appareil d'affichage (100) un deuxième signal d'image récupéré depuis un deuxième angle correspondant à la condition du dispositif mobile (200) effectuant une rotation parmi la pluralité d'angles, et qui commande à l'unité d'affichage (220) d'afficher le deuxième signal d'image.

14. Dispositif mobile selon la revendication 13, dans lequel la condition d'effectuer une rotation du dispositif mobile comprend l'un au moins parmi le deuxième angle et une direction de rotation du dispositif mobile.

15. Dispositif mobile selon la revendication 13 ou la revendication 14, dans lequel l'unité de commande (240) commande de fixer une condition de référence à une position du dispositif mobile lorsque l'appareil d'affichage récupère l'image multi-angle, et commande à l'unité de détection de détecter le deuxième angle et une direction de rotation du dispositif mobile depuis la condition de référence.
